Europäisches Patentamt

European Patent Office

Office européen des brevets

(19)

(11) Numéro de publication : **0 371 256 B1**

(12) **FASCICULE DE BREVET EUROPEEN**

(45) Date de publication du fascicule du brevet :
19.02.92 Bulletin 92/08

(51) Int. Cl.$^5$ : **G01D 3/04,** G01L 9/08

(21) Numéro de dépôt : **89119815.2**

(22) Date de dépôt : **25.10.89**

(54) **Dispositif de mesure d'une grandeur physique.**

(30) Priorité : **02.11.88 FR 8814388**

(43) Date de publication de la demande :
**06.06.90 Bulletin 90/23**

(45) Mention de la délivrance du brevet :
**19.02.92 Bulletin 92/08**

(84) Etats contractants désignés :
**CH DE GB IT LI NL**

(56) Documents cités :
**EP-A- 0 101 669
EP-A- 0 233 054**

(73) Titulaire : **ASULAB S.A.
Faubourg du Lac 6
CH-2501 Bienne (CH)**

(72) Inventeur : **Wiget, Fridolin
Avenue des Alpes 22
CH-2000 Neuchâtel (CH)**

(74) Mandataire : **de Montmollin, Henri et al
ICB Ingénieurs Conseils en Brevets SA
Passage Max Meuron 6
CH-2001 Neuchâtel (CH)**

**Description**

La présente invention a pour objet un dispositif de mesure d'une grandeur physique, ce dispositif comportant des moyens pour produire un signal électrique alternatif ayant une fréquence représentative de cette grandeur.

Certaines grandeurs physiques, en particuliers les forces et les températures, peuvent avantageusement être mesurées de cette façon. Dans le cas de la mesure d'une force, celle-ci peut être appliquée directement au dispositif ou résulter, par exemple, d'une pression ou d'une accélération à laquelle ce dispositif est soumis. Dans ce dernier cas, le dispositif se comporte en accéléromètre.

Un dispositif de ce type, mesurant une force, est décrit en détail par exemple dans le brevet EP-B-0 098 796, ou dans le brevet correspondant US-4 498 344. Dans cet exemple, le dispositif comporte un résonateur en forme de double diapason fixé à un support déformable auquel est appliquée la force à mesurer, cette force ayant pour effet de modifier la fréquence d'oscillation du résonateur, et un circuit d'entretien classique destiné à faire vibrer le résonateur à cette fréquence. Le résonateur et le circuit d'entretien forment ainsi un oscillateur, le circuit étant agencé de manière à fournir un signal de sortie constitué par une suite d'impulsions, la fréquence de répétition de ces impulsions, c'est-à-dire la fréquence de l'oscillateur, étant ainsi représentative de la force appliquée au dispositif. Cette fréquence est ensuite mesurée par un compteur classique, puis elle est étalonnée, au moyen d'un circuit de calcul numérique, en unités de force, éventuellement en unités de pression ou d'accélération. L'information fournie par le circuit de calcul, traduisant la contrainte subie par le résonateur, est enfin indiquée sur un affichage numérique.

Dans ce dispositif, la fréquence du signal fourni par l'oscillateur, qui est une grandeur analogique, est cependant mesurée puis traitée par des circuits logiques de manière que le résultat final apparaisse sous forme numérique. Etant donné que le signal de l'oscillateur a préalablement été mis sous forme d'une suite d'impulsions, c'est en effet la façon la plus précise, reproductible et fiable d'obtenir une mesure de la force appliquée au dispositif.

Pour certaines applications, il est par contre préférable que le résultat apparaisse sous forme analogique, c'est-à-dire qu'il soit donné par l'amplitude d'un signal variant de façon continue en fonction de la force à mesurer, et donc de la fréquence du signal fourni par l'oscillateur. Ceci peut être obtenu au moyen de circuits analogiques connus, fournissant à la sortie un signal continu dont l'amplitude est une mesure de la fréquence du signal appliqué à l'entrée. De tels circuits présentent cependant l'inconvénient d'être peu précis et peu stables en fonction du temps, leurs caractéristiques dépendant de composants susceptibles de vieillir. Il est aussi possible de faire usage de circuits logiques, connus également, réalisant directement la conversion d'un signal numérique en un signal analogique. Si ces circuits permettent de préserver la précision et la stabilité de la mesure numérique, ils présentent par contre le désavantage d'être complexes et coûteux.

Le but de la présente invention est de proposer un dispositif de mesure d'une grandeur physique, simple et bon marché, qui fournisse le résultat de la mesure sous forme analogique, tout en présentant les mêmes avantages que les dispositifs donnant ce résultat sous forme numérique.

Pour atteindre ce but, le dispositif selon l'invention, qui comporte des moyens pour produire un premier signal alternatif ayant une fréquence représentative de la grandeur physique à mesurer, est caractérisé en ce qu'il comprend en outre des moyens pour produire un deuxième signal alternatif ayant une fréquence représentative de l'amplitude d'un signal de sortie, et des moyens pour produire ce signal de sortie de manière que son amplitude dépende de la différence de phase entre le premier et le deuxième signal, l'amplitude de ce signal de sortie étant alors également représentative de la grandeur physique à mesurer.

D'autres caractéristiques et avantages du dispositif de mesure selon la présente invention ressortiront de la description qui va suivre, faite en regard du dessin annexé et donnant, à titre explicatif mais nullement limitatif, un exemple de réalisation d'un tel dispositif. Sur ce dessin, où les mêmes références se rapportent à des éléments analogues :

– la figure 1 représente un exemple de réalisation du circuit du dispositif selon l'invention ; et
– la figure 2 montre les principaux signaux apparaissant en différents points du circuit de la figure 1.

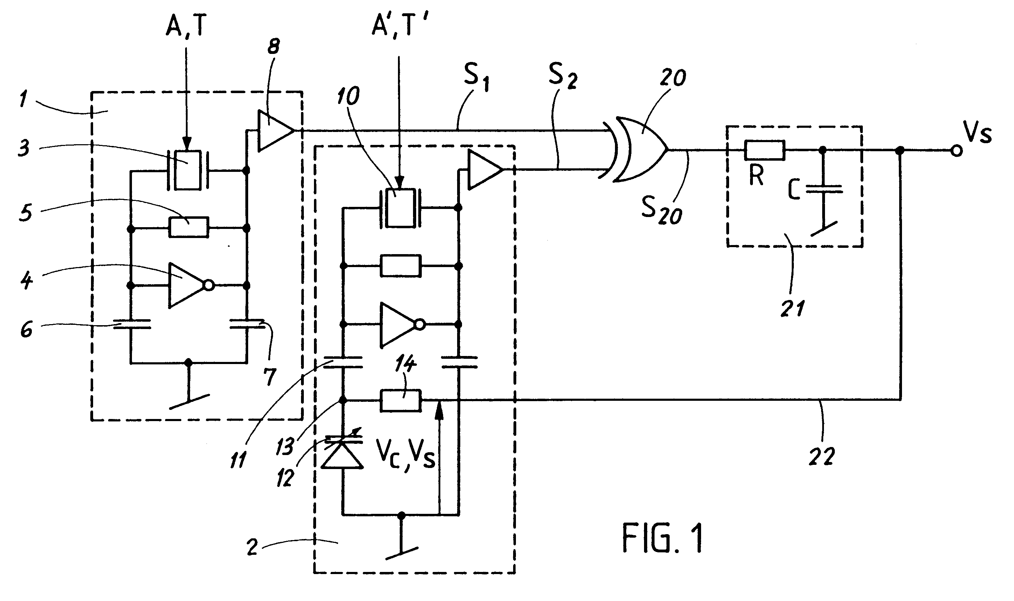

Le dispositif selon l'invention est représenté à titre d'exemple non limitatif sur la figure 1 dans un cas où il est destiné à mesurer une force A, mais des dispositifs analogues pourraient tout aussi bien convenir à la mesure d'autres grandeurs physiques.

La référence 1 désigne sur cette figure 1 un premier oscillateur qui comprend un résonateur 3, qui peut être par exemple en quartz, et un circuit d'entretien du type Colpitts, ce circuit comportant un inverseur 4, une résistance de polarisation 5, et deux condensateurs d'accord 6 et 7, ces composants étant interconnectés ensemble de façon bien connue et qui ne sera pas décrite.

La fréquence du signal de sortie de l'inverseur 4 est déterminée par la fréquence d'oscillation du résonateur 3 qui dépend de sa fréquence propre, de la force à laquelle il est soumis et, dans une moindre mesure, de la capacité des condensateurs 6 et 7, qui sont fixes dans ce cas.

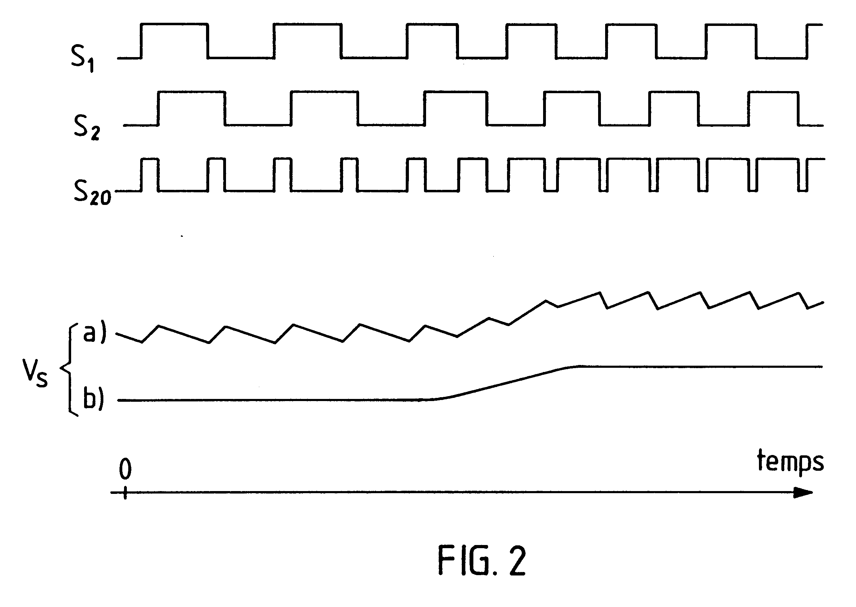

Le signal de sortie de l'inverseur 4 est appliqué à un circuit de mise en forme 8 qui, dans sa réalisation la plus simple, peut être un amplificateur ayant un gain élevé. Le circuit 8 délivre ainsi à sa sortie, qui est aussi la sortie du premier oscillateur 1, un signal S1, représenté sur la figure 2, qui est formé d'une suite d'impulsions rectangulaires. Le signal S1 sera considéré comme étant un signal logique dont la fréquence, mesurée par la fréquence de répétition des impulsions, correspond à la fréquence d'oscillation du résonateur 3.

Le résonateur 3 constitue dans ce dispositif le capteur de force qui peut, par exemple, être du type de celui décrit dans le brevet EP-B-0 098 796 déjà cité et sur le support duquel est appliquée la force à mesurer A. Dans ces conditions la force A modifie la fréquence d'oscillation du résonateur 3, ce qui produit une variation de la fréquence du signal S1, cette fréquence étant ainsi une mesure de l'intensité de la force appliquée.

Il y a lieu de remarquer que la fréquence du signal S1 peut dépendre, en plus de la force A, d'autres paramètres, comme par exemple de la température T du résonateur 3. Même si cet effet thermique est faible dans un capteur de force, il ne peut être entièrement éliminé et sa présence introduit une erreur de mesure dont il y a lieu de tenir compte.

En supposant que tous les effets sont linéaires, et en désignant par F1 la fréquence du signal S1, cette fréquence s'écrit, en tenant compte de la température,

$$F1 = Fo1 + Ka. A + Kt. (T-To),\quad (1)$$

relation dans laquelle Ka et Kt sont deux constantes caractéristiques du résonateur 3, To la température nominale du résonateur 3, et Fo1 la fréquence nominale de l'oscillateur 1, c'est-à-dire sa fréquence lorsque le résonateur 3 se trouve à la température To et qu'il n'est soumis à aucune force.

Un deuxième oscillateur, référencé 2, fait également partie du circuit représenté sur la figure 1. Cet oscillateur, du type VCO (pour Voltage Controlled Oscillator) bien connu, comprend un résonateur 10 et un circuit d'entretien identique à celui de l'oscillateur 1, à cette exception près que l'un des condensateurs d'accord est constitué par un condensateur fixe 11 disposé en série avec un condensateur variable 12, qui est constitué, dans cet exemple, par une diode polarisée en sens inverse. La capacité du condensateur 12 est commandée par une tension Vc, cette tension étant appliquée au point de jonction 13 des deux condensateurs 11 et 12 à travers une résistance de découplage 14. Cette résistance ne produit pas de chute de tension, ce qui fait que la tension Vc apparaît directement aux bornes du condensateur 12. Comme la fréquence d'oscillation d'un oscillateur dépend de la capacité de ses condensateurs d'accord, la fréquence de l'oscillateur 2 dépend donc de la tension Vc.

L'oscillateur 2 fournit un signal S2, également représenté sur la figure 2, qui est formé, comme le signal S1, d'une suite d'impulsions rectangulaires, la fréquence du signal S2, désignée par F2, dépendant de Vc.

Les signaux S1 et S2 sont périodiques et de même forme. Chacun de ces signaux est défini par son amplitude et sa fréquence et, en outre, par sa phase, désignée ci-après par P1 pour le signal S1 et par P2 pour le signal S2. La différence de phase, ou déphasage, entre les deux signaux S1 et S2 est désignée par P12 ou P21, suivant que c'est la phase de S1 ou de S2 qui est prise comme référence.

Pour faire ressortir tous les avantages de l'invention, il est avantageux de considérer le cas général où la fréquence d'oscillation du résonateur 10, comme celle du résonateur 3, dépend aussi d'une force qui lui est appliquée, désignée par A', et de la température T' à laquelle il se trouve. Dans ces conditions, si les effets sont linéaires, la fréquence F2 est donnée par la relation suivante :

$$F2 = Fo2 + K'a.A' + K't.(T'-T'o) + Kv.Vc.\quad (2)$$

Dans cette relation K'a et K't sont des constantes caractéristiques du résonateur 10, T'o la température nominale de ce résonateur 10, Kv est une constante caractéristique de l'oscillateur 2 dépendant, notamment, des caractéristiques du condensateur variable 12, et Fo2 la fréquence nominale de l'oscillateur 2, c'est-à-dire sa fréquence lorsque A', (T'-T'o) et Vc sont nuls.

Les signaux S1 et S2 peuvent être considérés comme étant des signaux logiques, chacun passant alternativement d'un niveau logique bas à un niveau logique haut et inversément. Ces signaux sont appliqués sur les entrées d'un circuit comparateur de phase constitué, dans le présent exemple, par une porte OU EXCLUSIF 20. Le signal S20 fourni par la sortie de la porte 20 est appliqué à l'entrée d'un filtre passe-bas 21, ce filtre délivrant une tension de sortie Vs. Le filtre 21 n'est constitué, dans cet exemple, que d'une seule cellule RC mais, bien entendu, pour améliorer le filtrage un filtre comportant plusieurs cellules ou un filtre différent, plus efficace, pourrait avantageusement être utilisé.

Le signal S20, fourni par la porte 20 et représenté sur la figure 2, se trouve au niveau logique bas lorsque les signaux S1 et S2 sont simultanément tous deux au niveau logique bas ou au niveau logique haut, et au niveau logique haut lorsque S1 et S2 sont simultanément à des niveaux logiques différents. Le signal S20 est ainsi formé d'une suite d'impulsions positives. Ces impulsions seront supposées être des impulsions de tension d'amplitude constante, cette amplitude pouvant être ajustée à une valeur donnée par des moyens de réglage non représentés.

Si on admet que les fréquences F1 et F2, tout en pouvant varier, sont très voisines ou égales, le rapport de la durée d'une impulsion du signal S20 sur la période de ce signal à cet instant est une mesure du déphasage, existant à ce moment, entre les signaux S1 et S2. Comme l'amplitude des impulsions du signal S20 est constante, la tension moyenne de ce signal est aussi une mesure de ce déphasage. Bien entendu la valeur de la tension moyenne, correspondant à un déphasage donné, peut être ajustée à une valeur arbitraire à l'aide des moyens de réglage de l'amplitude des impulsions du signal S20. Cette tension moyenne est par ailleurs égale à la tension Vs obtenue à la sortie du filtre passe-bas 21, et elle est représentée sur la figure 2, en a) dans le cas où ce filtre 21 est constitué d'une seule cellule RC, et en b) dans le cas où il est un filtre plus efficace.

Si le signal S1 est pris comme référence des phases et que le signal S2 est en retard sur S1, comme cela est représenté sur la figure 2, toute augmentation de la fréquence F1 causée, par exemple, par une augmentation de la force A, entraîne une augmentation du déphasage P12 de S2 par rapport à S1, donc une augmentation de l'amplitude de la tension Vs. De même, toute diminution de la fréquence F1 entraîne une diminution du déphasage P12 et, donc, de l'amplitude de la tension Vs.

Dans l'oscillateur 2, le condensateur 12 étant dans le cas présent constitué par la capacité de la jonction d'une diode, une augmentation de la tension Vc aux bornes de ce condensateur a pour effet de diminuer sa capacité. Cette diminution de capacité entraîne une augmentation de la fréquence F2 de l'oscillateur, et par conséquence une diminution du déphasage P12, et donc une diminution de l'amplitude de la tension Vs. De même, une diminution de la tension Vc augmente la capacité du condensateur 12, diminue la fréquence F2, augmente le déphasage P12 et, donc, l'amplitude de la tension Vs.

Etant donné que Vc et Vs varient en sens inverses, une liaison entre la résistance 14 et la sorte du filtre 21 obtenue au moyen d'une connexion 22, en imposant l'égalité entre ces tensions, établit une boucle d'asservissement de phase entre les signaux S1 et S2, asservissement appelé aussi PLL (pour Phase Locked Loop). La phase P2 est alors asservie à la phase P1, ce qui entraîne l'égalité des fréquences F1 et F2, F2 suivant les variations de F1.

Si l'on choisit pour le résonateur 10 un résonateur identique au résonateur 3, les constantes caractéristiques qui les définissent sont également identiques, c'est-à-dire que Ka = K'a, Kt = K't et To = T'o, de même que les fréquences nominales, soit Fo1 = Fo2. Si en outre on dispose les deux résonateurs 3 et 10 à proximité l'un de l'autre de manière qu'ils se trouvent toujours à la même température, on voit que, puisque par ailleurs l'asservissement de phase entraîne l'égalité des fréquences F1 et F2, en soustrayant membre à membre les relations (1) et (2) l'une de l'autre, il vient

$$Vs = K.(A - A') , \quad (3)$$

relation dans laquelle K = Ka / Kv.

Il apparaît qu'avec ce choix des résonateurs 3 et 10 et de leur disposition, la tension Vs est une fonction linéaire de la seule différence des forces A et A'. La tension Vs est ainsi une mesure analogique de la grandeur physique constituée par cette différence, et cette mesure est indépendante de la température, ce qui constitue un avantage important. Le dispositif qui vient d'être décrit correspond donc bien au but recherché par l'invention.

Si le dispositif est destiné à mesurer une force, il suffit de disposer le résonateur 10 de manière qu'il ne soit soumis à aucune force. La force A' étant alors nulle la relation (3) devient dans ce cas

$$Vs = K.A .$$

On peut également disposer les deux résonateurs 3 et 10 de manière qu'ils soient soumis à la même force, mais que celle-ci influence leur fréquence en sens inverses. Dans ce cas, on peut poser que A' = - A, et la relation (3) devient:

$$Vs = 2.K.A .$$

Toujours dans ce cas, la sensibilité du dispositif est donc doublée par rapport au cas précédent où le résonateur 10 n'était soumis à aucune force.

Le dispositif peut également être utilisé en accéléromètre. Dans ce cas, on peut par exemple fixer sur le support du résonateur 3 une masse M. La force A qui s'exerce sur le résonateur 3 lorsque cette masse M est soumise à une accélération étant proportionnelle à cette dernière, le signal Vs de sortie du dispositif est également proportionnel à cette accélération.

Dans ce cas également on peut doubler la sensibilité du dispositif en fixant également une masse M' = M sur le support du résonateur 10 et en disposant les résonateurs 3 et 10 de manière que les forces qu'ils subissent en réponse à une accélération provoquent des variations de leurs fréquences égales en valeurs absolues mais de sens opposés.

Il est évident que le dispositif selon l'invention tel qu'il vient d'être décrit permet de mesurer analogiquement d'autres grandeurs physiques que la force ou l'accélération.

Par exemple , le résonateur 10 peut être disposé de manière que sa température reste constante. Si aucune force n'est appliquée aux résonateurs 3 et 10, le signal de sortie Vs du dispositif de la figure 1 est alors une mesure analogique de la température à laquelle est soumis le résonateur 3.

Il va de soi que le dispositif de mesure qui vient d'être décrit peut subir différentes modifications et se présenter sous d'autres variantes, évidentes pour l'homme du métier, sans sortir du cadre de la présente invention.

**Revendications**

1. Dispositif de mesure d'une grandeur physique (A) comportant des moyens (1) pour produire un premier signal alternatif (S1) ayant une fréquence représentative de la grandeur physique (A), caractérisé en ce qu'il comprend en outre :

– des moyens (2) pour produire un deuxième signal alternatif (S2) ayant une fréquence représentative de l'amplitude d'un signal de sortie (Vs) ; et

– des moyens (20, 21) pour produire ledit signal de sortie (Vs) de manière que son amplitude dépende de la différence de phase entre ledit premier (S1) et ledit deuxième (S2) signal, l'amplitude dudit signal de sortie (Vs) étant alors également représentative de ladite grandeur physique (A).

2. Dispositif selon la revendication 1, dans lequel :

– lesdits moyens (1) pour produire le premier signal (S1) comprennent un premier oscillateur comportant un premier résonateur (3) ayant une fréquence d'oscillation dépendant de ladite grandeur physique (A) et un premier circuit d'entretien (4 à 8) des oscillations dudit premier résonateur (3), le signal de sortie de ce premier circuit (4 à 8) constituant ledit premier signal (S1), ledit dispositif étant caractérisé en ce que :

– lesdits moyens (2) pour produire le deuxième signal (S2) comprennent un deuxième oscillateur comportant un deuxième résonateur (10) et un deuxième circuit d'entretien des vibrations dudit deuxième résonateur (10), ce deuxième circuit d'entretien, dont le signal de sortie constitue ledit deuxième signal (S2), comportant des moyens (12, 14) pour faire varier la fréquence du deuxième signal (S2) en fonction de l'amplitude dudit signal de sortie (Vs) et en ce que :

– lesdits moyens pour produire le signal de sortie (Vs) comportent un circuit comparateur de phase (20) fournissant un signal (S20) dont la valeur moyenne est représentative de l'écart de phase entre lesdits premier (S1) et deuxième (S2) signaux, et un filtre passe-bas (21) connecté audit circuit comparateur (20) et délivrant ledit signal de sortie (Vs), l'amplitude de ce signal de sortie (Vs) étant représentative dudit écart de phase et de ladite grandeur physique (A).

3. Dispositif selon la revendication 2, caractérisé en ce que ledit deuxième résonateur (10) est identique audit premier résonateur (3).

4. Dispositif selon la revendication 2, caractérisé en ce que lesdits résonateurs (3, 10) sont réalisés en un matériau piézoélectrique.

5. Dispositif selon la revendication 2, caractérisé en ce que, ledit deuxième résonateur (10) est agencé de manière que la fréquence du deuxième signal (S2) varie également en fonction de ladite grandeur physique (A), et en ce que lesdits premier (3) et deuxième résonateurs (10) sont agencés de manière que, pour une même variation de ladite grandeur physique (A), les fréquences dudit premier signal (S1) et dudit deuxième (S2) varient de la même quantité mais dans des sens opposés.

6. Dispositif selon l'une des revendications 2 à 5, caractérisé en ce que ledit circuit comparateur de phase est une porte OU EXCLUSIF (20).

**Claims**

1. Apparatus for measuring a physical quantity (A) comprising means (1) for producing a first alternating signal (S1) having a frequency representing the physical quantity (A), characterized in that it further comprises :

– means (2) for producing a second alternating signal (S2) having a frequency representing the amplitude of an output signal (Vs); and

– means (20, 21) for producing said output signal (Vs) in such a manner that its amplitude depends on the phase difference between said first signal (S1) and said second signal (S2), the amplitude of said output signal (Vs) thus also representing said physical quantity (A).

2. Apparatus according to claim 1, wherein :

– said means (1) for producing the first signal (S1) comprise a first oscillator including a first resonator (3) having an oscillation frequency dependent on said physical quantity (A) and a first oscillator driving circuit (4 to 8) for maintaining oscillation of said first resonator (3), the output signal of this first circuit (4 to 8) constituting said first signal (S1), said apparatus being characterized in that :

– said means (2) for producing the second signal (S2) comprise a second oscillator including a second resonator (10) and a second oscillator driving circuit for maintaining oscillations of said second resonator (10), said second driving circuit, whose output signal constitutes said second signal (S2), having means (12, 14) for varying the frequency of the second signal (S2) in dependence on the amplitude of said output signal (Vs); and in that

– said means for producing the output signal (Vs) comprise a phase comparator circuit (20) supplying a signal (S20) whose mean value represents the phase difference between said first signal (S1) and said second signal (S2), and a low-pass filter (21) connected to said comparator circuit (20) and delivering said output signal (Vs), the amplitude of this output signal (Vs) representing said phase difference and said physical quantity (A).

3. Apparatus according to claim 2, characterized in that said second resonator (10) is identical to said first resonator (3).

4. Apparatus according to claim 2, characterized in that said resonators (3, 10) are made of piezoelectric material.

5. Apparatus according to claim 2, characterized in that said second resonator (10) is arranged in such a manner that the frequency of the second signal (S2) also varies in dependence on said physical quantity (A), and in that said first (3) and said second (10) resonators are so arranged that, for a same variation of said physical quantity (A), the frequencies of said first signal (S1) and said second signal (S2) vary by the same amount but in opposite directions.

6. Apparatus according to any one of claims 2 to 5, characterized in that said phase comparator circuit is an EXCLUSIVE OR gate (20).

**Patentansprüche**

1. Vorrichtung zum Messen einer physikalischen Größe (A) mit Mitteln (1) zum Erzeugen eines ersten Wechselsignals (S1) mit einer für die physikalische Größe repräsentativen Frequenz, dadurch gekennzeichnet, daß sie ferner umfaßt:
– Mittel (2) zum Erzeugen eines zweiten Wechselsignals (S2) mit einer für die Amplitude eines Ausgangssignals (Vs) repräsentativen Frequenz, und
– Mittel (20, 21) zum Erzeugen des Ausgangssignals (Vs) derart, daß seine Amplitude von der Phasendifferenz zwischen dem ersten (S1) und zweiten (S2) Signal abhängt, wobei die Amplitude des Ausgangssignals (Vs) demgemäß ebenfalls repräsentativ für die physikalische Größe (A) ist.

2. Vorrichtung nach Anspruch 1, bei der
– die Mittel (1) zum Erzeugen des ersten Signals (S1) einen ersten Oszillator mit einem ersten Resonator (3) mit einer von der physikalischen Größe (A) abhängenden Schwingungsfrequenz sowie einen ersten Schwingungserregerkreis (4 bis 8) des ersten Resonators (3) umfassen, wobei das Ausgangssignal dieses ersten Kreises (4 bis 8) das erste Signal (S1) bildet, welche Vorrichtung dadurch gekennzeichnet ist, daß
– die Mittel (2) zum Erzeugen des zweiten Signals (S2) einen zweiten Oszillator mit einem zweiten Resonator (10) und einem zweiten Schwingungserregerkreis des zweiten Resonators (10) umfassen, welcher zweite Erregerkreis, dessen Ausgangssignal das zweite Signal (S2) bildet, Mittel (12, 14) zum Variieren der Frequenz des zweiten Signals (S2) in Funktion der Amplitude des Ausgangssignals (Vs) umfaßt, und daß
– die Mittel zum Erzeugen des Ausgangssignals (Vs) einen Phasenkomparatorkreis (20), der ein Signal (S20) mit einem für die Phasendifferenz zwischen dem ersten (S1) und dem zweiten (S2) Signal repräsentativen Mittelwert liefert, und ein an den Komparatorkreis (20) angeschlossenes Tiefpaßfilter (21) umfaßt, das das Ausgangssignal (Vs) liefert, wobei die Amplitude dieses Ausgangssignals (Vs) repräsentativ für die Phasendifferenz und die physikalische Größe ist.

3. Vorrichtung nach Anspruch 2, dadurch gekennzeichnet, daß der zweite Resonator (10) identisch mit dem ersten Resonator (3) ist.

4. Vorrichtung nach Anspruch 2, dadurch gekennzeichnet, daß die Resonatoren (3, 10) aus einem piezoelektrischen Material gefertigt sind.

5. Vorrichtung nach Anspruch 2, dadurch gekennzeichnet, daß der zweite Resonator (10) derart ausgebildet ist, daß sich auch die Frequenz des zweiten Signals (S2) in Funktion der physikalischen Größe (A) ändert, und daß der erste (3) und zweite (10) Resonator derart ausgebildet sind, daß sich bei gleicher Änderung der physikalischen Größe (A) die Frequenzen des ersten (S1) und des zweiten (S2) Signals um gleiche Quantitäten, jedoch in entgegengesetzten Richtungen ändern.

6. Vorrichtung nach einem der Ansprüche 2 bis 5, dadurch gekennzeichnet, daß der Phasenkomparatorkreis ein Exklusiv-ODER-Gatter (20) ist.

FIG. 1

EP 0 371 256 B1

EP 0 371 256 B1

FIG. 2